# EUROPEAN PATENT APPLICATION

(11) **EP 4 737 422 A1**
(43) Date of publication of application: **06.05.2026**
(21) Application number: 25209055.0
(22) Date of filing: 16.10.2025
(51) Int. Cl.: C04B 26/08, C04B 38/00, C09D 7/43, C09D 7/40

(54) **EXPANDED MICROSPHERES FORMULATION**

(30) Priority: 31.10.2024 EP 24210159
(71) Applicant: Nouryon Chemicals International B.V., 1101 BZ Amsterdam (NL)
(72) Inventor: SVENSSON, Per Olov Fredrik, 1101 BZ Amsterdam (NL); AJDÉN, Per Erik, 1101 BZ Amsterdam (NL)
(74) Representative: Ingrassia, Fisher & Lorenz UK Ltd.

(57) **Abstract**

The present disclosure relates to a composition comprising thermally expanded microspheres suspended in a non-Newtonian fluid, and the use of said composition for water-based applications, such as emulsion explosives, paint, water based coatings, coatings for thermal printing paper and other, porous ceramics, gypsum board, modelling clay, crack fillers, and cementitious compositions.

## Description

### Technical Field

The present disclosure relates to a composition comprising thermally expanded microspheres suspended in a non-Newtonian fluid, and the use of said composition in water-based applications, such as for sensitizing emulsion explosives, paint, water based coatings, coatings for thermal printing paper and other, porous ceramics, gypsum board, modelling clay, crack fillers, and cementitious compositions.

### Background

Thermally expandable microspheres are known in the art and described in detail in, for example, US Patent No. 3615972. Various grades of expandable microsphere, having different expansion temperature, are commercially available from Nouryon under the trademark Expancel^{™}, both as dry free flowing microspheres and as an aqueous slurry of microspheres.

Thermally expandable microspheres typically comprise a blowing agent encapsulated within a thermoplastic shell. Upon heating, the blowing agent evaporates to increase the internal pressure, at the same time as the shell softens, resulting in significant expansion of the microspheres, normally from 2 to 5 times their diameter. Thermoplastic microspheres can be used in various applications as unexpanded or expanded. Examples of products where dry (essentially water free) expanded microspheres are used are as sensitizer in emulsion explosives and as light weight filler in solvent based paints and various thermosetting materials such as cultured marble, polyester putty and artificial wood. In many products, such as water based paints and coatings, thermal printing papers, porous ceramics and emulsion explosives, slurries (i.e., liquid suspensions) of expanded microspheres are used.

A significant issue with the use of slurries of expanded microspheres in many applications, however, is slurry stability. It has been found that slurries of the expanded microspheres (prior to use in subsequent applications), which usually have a low final solids content of around 0.5-20 wt.% (typically around 1-10 wt.%), tend to be unstable (which is not typically a problem observed for equivalent slurries of unexpanded microspheres), hence there is generally a limited operating window between slurry formation and subsequent use in applications (usually in the region of a few minutes to a few hours, depending on the type of expanded microsphere, before the slurry becomes too unstable to be successfully used in the intended application). The same stability issue for expanded microspheres is not typically observed in the final application product (e.g., water based paints and coatings, thermal printing papers, porous ceramics, emulsion explosives, etc.) likely due to the presence of application-specific stabilizers/binders/matrices/etc. and/or the substantial increase in solids content in the application product formulation, In view of this, slurries of expanded microspheres generally need to be produced on-site using specialist equipment and then used immediately. It would be preferable to find a solution to this slurry instability issue, such that said pre-application slurry of expanded microspheres could be produced off-site (e.g., at a single production facility) and transported to the place of application.

### Description

The inventors have found a highly effective solution to this issue: use a non-Newtonian fluid to suspend the expanded microspheres. To the best of the inventors' knowledge, to date slurries of expanded microspheres have always used a Newtonian liquid to suspend the expanded microspheres (e.g., water, or water comprising an additive (e.g., a thickener) that yields a Newtonian solution, such as a Newtonian starch solution). By using non-Newtonian fluids (e.g., shear-thinning liquids) instead of Newtonian fluids, the resulting slurries were found to be surprisingly stable (i.e., stable for months). Accordingly, in a first aspect, the present disclosure relates to a composition comprising thermally expanded microspheres suspended in a non-Newtonian fluid.

A non-Newtonian fluid is a fluid that does not follow Newton's law of viscosity, i.e., it has variable viscosity dependent on stress (e.g., viscosity varies in response to application of shear). Conversely, a Newtonian fluid is a fluid in which viscosity is independent of the shear rate. A non-Newtonian fluid that has a reduced viscosity in response to application of shear is known as a "shear-thinning fluid". Shear-thinning liquids are the preferred non-Newtonian fluids of the present disclosure.

The non-Newtonian fluid is preferably a liquid comprising a non-Newtonian thickener. As used herein, the term "non-Newtonian thickener" means a thickener that, when dissolved in a liquid, yields a non-Newtonian fluid, preferably a shear-thinning fluid. The liquid is not considered to be a limiting factor, hence the liquid may be a water-based liquid, an organic liquid, an inorganic liquid, or combinations thereof. For example, the non-Newtonian fluid may be an aqueous solution of a water-soluble non-Newtonian thickener, or may be a solution comprising an organic-soluble non-Newtonian thickener dissolved in an organic liquid (such as an organic solvent, e.g., an aliphatic alcohol). The liquid preferably makes up at least 60 wt.% of the total weight of the composition, preferably at least 65 wt.%, preferably at least 70 wt.%, preferably at least 75 wt.%. Preferred non-Newtonian thickeners include polysaccharides that yield a non-Newtonian fluid when dissolved in a liquid solvent (e.g., water or a water-based solvent). Non-limiting examples of such polysaccharides include diutan gums, xanthan gums, cellulose gums, carrageenans, or combinations thereof. The preferred polysaccharide of the present disclosure is diutan gum. The amount of thickener is preferably 0.01-10 wt.%, preferably 0.02-5 wt.%, preferably 0.03-3 wt.%, preferably 0.04-2 wt.%, preferably 0.05-1 wt.%, with particular preference for an amount of thickener of from about 0.1-0.4 wt.% (relative to the total weight of the non-Newtonian fluid).

In some embodiments, the composition may further comprise a biocide (particularly in the case where the non-Newtonian thickener is a polysaccharide, and the liquid is water or a water-based liquid/solvent).

The type of thermally expanded microspheres of the present disclosure is not considered to be limiting upon the present disclosure. That said, preference is shown for the thermally expanded microspheres that comprise a polymeric shell encapsulating a hollow core, wherein the hollow core optionally comprises a blowing agent. The polymeric shell typically comprises or consists of a thermoplastic polymer. Such thermally expanded microspheres are commercially available in dry form from Nouryon under the trade name Expancel^{®}. Suitable thermoplastic polymers for use in the present disclosure include, but are not necessarily limited to, one or more polymers selected from the group consisting of polymers obtained by polymerizing one or more vinyl monomers, lignins, polysaccharides, polysaccharide derivatives, polyesters, polyethers, polyacids, polyols, polyalkenes, polyanhydrides, or any combination thereof. In some embodiments, the one or more vinyl monomers are selected from the group consisting of vinylidene chloride, acrylonitrile, methyl methacrylate, methyl acrylate, methacrylonitrile, methacrylic acid, acrylic acid, styrene, vinyl acetate, and combinations thereof. In some embodiments, the lignins are selected from the group consisting of Kraft lignin, lignosulfonates, lignin/hemicellulose blends, and lignosulfonate/hemicellulose blends. In some embodiments, the polysaccharides and polysaccharide derivatives may be selected from the group consisting of cellulose, cellulose derivatives, chitosan, hemicellulose, and alginates. Preferred cellulose derivatives include cellulose esters and cellulose ethers. In some embodiments, the polymer is selected from Kraft lignin, lignosulfonates, lignosulfonate/hemicellulose blends, cellulose acetate, cellulose acetate propionate, carboxymethyl cellulose, homo- or co-polymers of styrene, vinyl acetate, lactic acid, glycolic acid, vinyl alcohol, polyacids, acrylic acid, or a combination thereof. In some embodiments, the polymer is a polyvinyl alcohol obtained by hydrolysis of polyvinyl acetate. The degree of hydrolysis is not considered a limiting factor, however in a preferred embodiment the polyvinyl alcohol has a degree of hydrolysis of at least 50%, preferably at least 70%, preferably at least 80%, such as from 50-100%, 70-100%, or 80-100%. Any combination of the aforementioned polymeric components can be used. Such combinations also include copolymers of any of the aforementioned polymeric components. It is preferable for the polymer(s) to have a number average molecular weight (Mn) in the range of from 500 to 700 000, for example in the range of from 1 000 to 500 000, preferably from 2000 to 400 000. In some embodiments, it is in the range of from 1 000 to 100 000, for example from 1 000 to 80 000, or from 2 000 to 50 000. For the avoidance of doubt, Mn is determined by gel permeation chromatography (GPC) using polystyrene standards for calibration. When a blowing agent is included in the hollow core of the thermally expanded microspheres, the blowing agent is preferably one or more low boiling hydrocarbons or halogenated hydrocarbons, which are liquid at room temperature, but which vaporize on heating. In that respect, the blowing agents generally have a boiling point above 25°C at 5.0 bara pressure or above 25°C at 3.0 bara pressure, where "bara" stands for bar-absolute. In embodiments, they have a boiling point above 25°C at atmospheric pressure (1.013 bara). Typically, they have a boiling point of 250°C or less at atmospheric pressure, for example 220°C or less, or 200°C or less. They are preferably inert, and do not react with the polymer. Boiling points at elevated pressures can be calculated using the Clausius Clapeyron equation. Examples of blowing agents include alcohols, dialkyl ethers, alkanes and halocarbons, e.g. chlorocarbons, fluorocarbons or chlorofluorocarbons. In embodiments, the alcohol comprises a C₂ to C₈ alcohol, such as a C₂ to C₆ alcohol or a C₂ to C₄ alcohol. In embodiments, the dialkyl ether comprises two alkyl groups each selected from C₂ to C₅ alkyl groups. In embodiments, the alkane is a C₄ to C₁₂ alkane. In embodiments, the haloalkane is selected from C₂ to C₁₀ haloalkanes. The haloalkanes can comprise one or more halogen atoms selected from chlorine and fluorine. The alkyl or haloalkyl groups in the alcohols, dialkyl ethers, alkanes and haloalkanes can be linear, branched or cyclic. One or a mixture of one or more blowing agents can be used. In embodiments, for environmental reasons, the one or more blowing agents are selected from alcohols, alkyl ethers and alkanes, and in further embodiments the one or more blowing agents are selected from alcohols and alkanes, and preferably are alcohols. Haloalkanes are preferably avoided, due to their potential ozone depletion properties, and also due to their generally higher global warming potential. Examples of suitable blowing agents that can be used include methanol, ethanol, n-propanol, isopropanol, n-butanol, tert-butyl alcohol, n-pentanol, isopentanol, n-hexanol, isohexanol, heptanol, isoheptanol, octanol, isooctanol, n-pentane, isopentane, neopentane, cyclopentane, cyclohexane, n-butane, isobutane, isohexane, neohexane, heptane, isoheptane, octane, isooctane, isodecane, and isododecane. In preferred embodiments, the blowing agent is selected from C₂ to C₈ hydrocarbons, such as C₂ to C₆ hydrocarbons or C₂ to C₄ hydrocarbons. In further preferred embodiments, the blowing agent comprises a blowing agent selected from isooctane, isohexane, isopentane, isobutane, tert-butyl acetate, butyl acetate, methyl tert-butyl ether, tert-butyl alcohol, and combinations thereof.

The composition comprising thermally expanded microspheres suspended in a non-Newtonian fluid as described herein has a solids content of about 0.5-20 wt.%, preferably about 1-10 wt.%, such as from about 2-5 wt.%, relative to the total weight of the composition. The term "solids content" as used herein has its ordinary meaning, namely the total amount of solids in the composition relative to the total weight of the composition. It would be routine for persons skilled in the art to prepare a composition comprising a specified solids content, much like it would be routine for persons skilled in the art to determine the solids content of a composition.

Various methods and devices have been developed for preparing thermally expanded microspheres. Non-limiting examples include the following patents and applications, which are hereby incorporated by reference. US 5484815 and US 7192989 disclose methods and devices suitable for expanding dry microspheres. US 4513106 discloses a method and a device suitable for expanding microspheres in an aqueous slurry by introducing steam to the slurry in a pressure zone in an amount sufficient for heating the microspheres and at least partially expand them, followed by allowing the partially expanded microspheres to leave the pressure zone under a pressure drop whereby the microspheres are further expanded and accelerated into a stream with a velocity of at least 1 m/s. In WO2014198532 an expander for non-expanded thermally expandable microspheres is described, wherein a slurry of the microspheres in a suitable carrier is brought into a pressure zone and heated without contacting the slurry directly with the heating medium. Another expansion device is described in WO2016091847, which discloses an apparatus and method that is suitable for on-site expansion of the thermally expandable thermoplastic microspheres for water based applications e.g. emulsion explosives, paint, water based coatings, coatings for thermal printing paper and other, porous ceramics, gypsum board, modelling clay, crack fillers, and cementitious compositions. Apparatus and methods for preparing thermally expanded microspheres are therefore well documented in the prior art, hence there is no need for an extensive discussion of such methods and apparatus herein.

In a second aspect, the present disclosure relates to the use of a composition comprising thermally expanded microspheres suspended in a non-Newtonian fluid for water-based applications (e.g., as a filler in such water-based applications), such as emulsion explosives, paint, water based coatings, coatings for thermal printing paper and other, porous ceramics, gypsum board, modelling clay, crack fillers, and cementitious compositions.

### Worked Example

Expanded microspheres were prepared using the apparatus disclosed in WO2016091847. The aqueous slurry of expanded microspheres that was obtained from the outlet of the expander of said apparatus was diluted with an aqueous solution* to yield a slurry comprising the expanded microspheres suspended in a non-Newtonian liquid. The resultant shear-thinning slurry had a final solid content of about 3.7 wt.% and was found to be stable even after several months of storage.

*The aqueous solution comprised 0.2 wt.% thickener (Kelco-crete DG-F, a diutan gum, which is a non-Newtonian thickener) and 0.5 wt.% biocide.

In this specification, unless expressly otherwise indicated, the word 'or' is used in the sense of an operator that returns a true value when either or both of the stated conditions is met, as opposed to the operator 'exclusive or' which requires that only one of the conditions is met. The word 'comprising' is used in the sense of 'including' rather than to mean 'consisting of'. All prior teachings acknowledged above are hereby incorporated by reference. No acknowledgement of any prior published document herein should be taken to be an admission or representation that the teaching thereof was common general knowledge in Europe or elsewhere at the date hereof.

## Claims

1. A composition comprising thermally expanded microspheres suspended in a non-Newtonian fluid, wherein the composition has a solids content of about 0.5-20 wt.%, relative to the total weight of the composition.

2. The composition of claim 1, wherein the non-Newtonian fluid is a liquid comprising a non-Newtonian thickener.

3. The composition of claim 2, wherein the liquid is a water-based liquid, an organic liquid, an inorganic liquid, or combinations thereof.

4. The composition of claims 2 or 3, wherein the non-Newtonian thickener is a polysaccharide.

5. The composition of claim 4, wherein the polysaccharide is a diutan gum, a xanthan gum, a cellulose gum, a carrageenan, or combinations thereof.

6. The composition of claims 4 or 5, wherein the polysaccharide is a diutan gum.

7. The composition of any one of claims 1 to 6, wherein the composition further comprises a biocide.

8. The composition of any one of claims 1 to 7, wherein the thermally expanded microspheres comprise a polymeric shell encapsulating a hollow core, wherein the hollow core optionally comprises a blowing agent.

9. The composition of claim 8, wherein the polymeric shell comprises or consists of one or more thermoplastic polymers.

10. The composition of claim 9, wherein the one or more thermoplastic polymers is selected from polymers obtained by polymerizing one or more vinyl monomers, lignins, polysaccharides, polysaccharide derivatives, polyesters, polyethers, polyacids, polyols, polyalkenes, polyanhydrides, or any combination thereof.

11. The composition of any one of claims 2-10, wherein the thickener is present in an amount of about 0.01-10 wt.% relative to the total weight of the non-Newtonian fluid.

12. The composition of any one of claims 1-11, wherein the composition has a solids content of about 1-10 wt.%, relative to the total weight of the composition.

13. Use of a composition according to any one of claims 1-12 for water-based applications.

14. The use of claim 13, wherein the water-based applications include emulsion explosives, paint, water based coatings, coatings for thermal printing paper and other, porous ceramics, gypsum board, modelling clay, crack fillers, and cementitious compositions.
